# FASCICULE DE BREVET EUROPEEN

(11) **EP 2 761 803 B1**
(45) Date de publication et mention de la délivrance du brevet: **15.07.2015**
(21) Numéro de dépôt: 12775196.4
(22) Date de dépôt: 28.09.2012
(51) Int. Cl.: H04L 9/08

(54) **METHODE ET DISPOSITIF DE SYNCHRONISATION DE SOURCES D'INTRICATION POUR RESEAU DE COMMUNICATION QUANTIQUE**
VERFAHREN UND VORRICHTUNG ZUR SYNCHRONISIERUNG VON VERSCHRÄNKUNGSQUELLEN FÜR EIN QUANTENKOMMUNIKATIONSNETZ
METHOD AND DEVICE FOR SYNCHRONIZING ENTANGLEMENT SOURCES FOR A QUANTUM COMMUNICATION NETWORK

(30) Priorité: 30.09.2011 FR 1158857
(43) Date de publication de la demande: 06.08.2014
(73) Titulaire: Centre National de la Recherche Scientifique (CNRS), 75794 Paris Cedex 16 (FR); Université De Nice Sophia Antipolis, 06103 Nice (FR)
(72) Inventeur: TANZILLI, Sébastien, F-06000 Nice (FR); D'AURIA, Virginia, F-06000 Nice (FR); ALIBART, Olivier, F-06000 Nice (FR); MARTIN, Anthony Christophe Mickaël, F-06100 Nice (FR); LABONTE, Laurent, 06100 Nice (FR)
(74) Mandataire: Osha Liang
(86) Numéro de dépôt international: PCT/EP2012/069281
(87) Numéro de publication internationale: WO 2013/045674

(56) Documents cités:
- GB-A- 2 471 470
- Olivier Landry: "Tools for quantum repeaters: quantum teleportation, independent sources of entangled photons and entanglement purification", , 1 janvier 2010 (2010-01-01), XP055025517, Extrait de l'Internet: URL:http://archive-ouverte.unige.ch/vital/ access/services/Download/unige:6827/ATTACH MENT01 [extrait le 2012-04-24]
- LIJUN MA ET AL: "1310â nm differential-phase-shift QKD system using superconducting single-photon detectors - The identification of any commercial product or trade name does not imply endorsement or recommendation by the National Institute of Standards and Technology", NEW JOURNAL OF PHYSICS, INSTITUTE OF PHYSICS PUBLISHING, BRISTOL, GB, vol. 11, no. 4, 1 avril 2009 (2009-04-01), page 45020, XP020154507, ISSN: 1367-2630

## Description

### ETAT DE L'ART

### Domaine technique de l'invention

La présente invention concerne une méthode et un dispositif de synchronisation de sources d'intrication pour réseau de communication quantique, notamment pour les réseaux de communication quantique longue distance.

### Etat de l'art

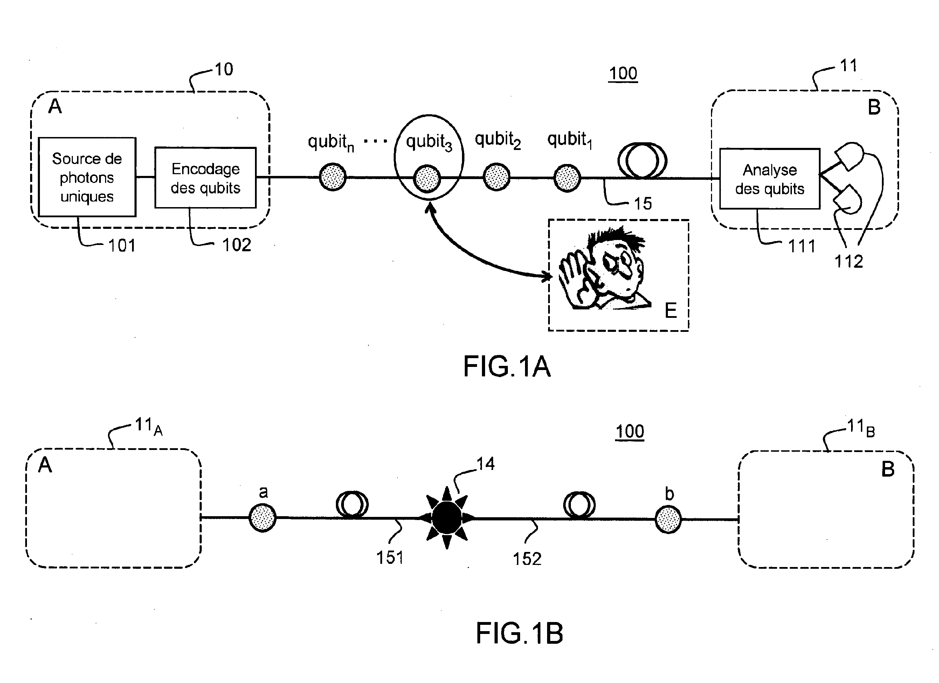

Les communications quantiques ont pour objectif de transmettre des états quantiques (ou « qubits » selon l'abréviation de l'expression anglo-saxonne « quantum bits ») d'un lieu vers un autre. La figure 1A illustre ainsi un réseau simple de communication quantique 100 entre un premier lieu A et un second lieu B permettant à deux interlocuteurs distants, traditionnellement nommés « Alice » et « Bob », d'établir une clé secrète à très haute confidentialité. Dans cet exemple, se trouve au niveau du lieu A un émetteur 10 comprenant une source 101 de photons uniques (par exemple une source d'atomes à deux niveaux ou une boîte quantique ou une source de photons uniques annoncés basée sur l'optique non linéaire) et un dispositif 102 d'encodage permettant de coder chaque bit de la clé à transmettre par un photon dont l'état quantique (qubit) est déterminé de façon aléatoire. L'état quantique est l'état codé sur une propriété du photon appelée « observable quantique », cette propriété pouvant être par exemple la polarisation, la longueur d'onde ou le temps d'émission (autrement appelé « time-bin » selon l'expression anglo-saxonne). Les photons sont transmis par exemple au moyen d'une fibre optique 15. Au niveau du lieu B se trouve un récepteur 11 comprenant un dispositif d'analyse des qubits 111 et deux détecteurs 112, par exemple des détecteurs de photons uniques, permettant l'analyse de l'état quantique selon deux bases de mesure. Différents protocoles connus de distribution des clés mis en oeuvre pour l'encodage et l'analyse des qubits permettent aux deux partenaires de savoir avec certitude si la clé ou une partie de la clé a été interceptée par un espion E (traditionnellement appelé « Eve »).

Dans le cadre des communications quantiques sur longues distances, les photons aux longueurs d'onde dite « télécom » se sont naturellement imposés comme support idéal à l'information quantique en raison de leur très faible interaction avec l'environnement et des faibles pertes à la propagation dans les fibres optiques standards. Les longueurs d'onde télécom sont définies par l'Union Internationale des Télécommunications (UIT) sous forme de bandes de fréquences normalisées (par exemple O, E, S, C, L, U). Cependant, bien que très faibles, les pertes en transmission posent une limite au-delà de laquelle la communication n'est plus possible puisque le taux de photons détectés devient plus faible que le taux de bruit dans le détecteur qui reste la principale limitation du rapport signal sur bruit. De nombreux travaux de recherche ont toutefois poussé ces liens sécurisés sur des distances allant jusqu'à quelques centaines de kilomètres, au prix toutefois d'importants efforts sur l'optimisation du matériel utilisé et d'un taux final d'établissement de clefs secrètes très faible. En effet, la régénération du signal optique au moyen d'amplificateurs télécoms standards (répéteurs) n'est pas possible en communication quantique du fait du théorème dit de « non-clonage » car elle perturberait le signal de la même façon qu'un espion le ferait en cherchant à intercepter le signal.

La figure 1B propose un réseau de communication quantique entre A et B dans lequel la distance de communication peut être doublée. Pour ce faire, une source d'émission de photons intriqués 14, ou source d'intrication, émet des paires de photons liés par l'une de leurs observables quantiques. Autrement dit, l'état quantique de chacun des photons pris individuellement ne peut pas être défini. Une telle source de paire de photons intriqués est par exemple basée sur l'optique non linéaire et comprend la conversion dans un cristal non linéaire d'un photon issu d'un faisceau de pompe en une paire de photons, cette conversion se faisant avec une certaine probabilité. Sur chacun des lieux A et B se trouve un récepteur 11, chaque récepteur comprenant des éléments similaires (non représentés) au récepteur 11 de la figure 1A. Les photons intriqués se propageant de part et d'autre de la source 14 vers les lieux A et B sur des tronçons de fibre optique référencés respectivement 151, 152, on comprend que par rapport au réseau de la figure 1A, il est possible de presque doubler la distance de communication entre A et B si les mêmes ressources techniques (notamment fibres et détecteurs) sont utilisées. Cependant, la même limitation relative aux pertes en transmission s'applique sur chacun des tronçons, et il ne sera pas possible d'obtenir des longueurs de réseau supérieures au double de celles obtenues dans un schéma du type de celui de la figure 1A.

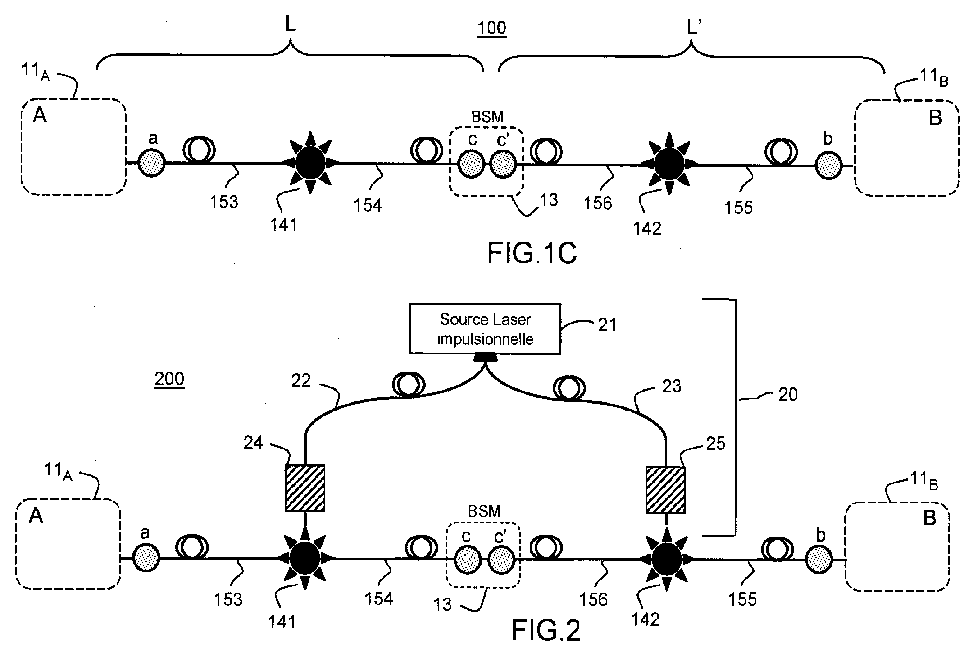

Seuls les réseaux de communication quantique basés sur des concepts de «relais quantiques » peuvent permettre de couvrir des distances plus grandes. Dans un tel réseau, des paires de photons intriqués, c'est-à-dire liés par l'un de leurs observables quantiques, se propagent sur des sections courtes et sont combinés en cascade afin de couvrir une distance plus importante (voir par exemple D. Collins et al., « Quantum relays for long distance quantum relay cryptography », Jour. Mod. Opt. 52, 735 (2005)). On parle alors de « téléportation d'intrication». La figure 1C illustre ainsi un réseau de communication quantique entre A et B avec deux sources de photons intriqués 141 et 142 séparées spatialement et une station relai 13 située entre les deux sources, station dans laquelle on réalise une opération de mesure projective appelée BSM, selon l'abréviation de l'expression anglo-saxonne «Bell State Measurement ». La source d'intrication 141 émet des paires de photons intriqués a et c qui se propagent sur des tronçons de fibres optiques 153, 154 respectivement vers un récepteur 11_{A} en A et vers la station relai 13. La source d'intrication 142 émet des paires de photons intriqués b et c' qui se propagent sur des tronçons de fibres optiques 155, 156 respectivement vers un récepteur 11_{B} en B et vers la station relai 13. Les récepteurs comprennent comme précédemment un dispositif d'analyse des qubits et une paire de détecteurs de photons uniques. La station relai permet la mesure de projection sur un état dit état de Bell des photons c et c' émis respectivement par les deux sources indépendantes 141 et 142, la mesure de projection étant basée sur l'interférence à deux photons des photons c et c' provenant de chacune des deux sources d'intrication. La mesure d'interférence déclenche un signal au niveau de chacun des récepteurs situés en A et B permettant la mesure des qubits a et b respectivement. Il est donc nécessaire de synchroniser l'ensemble des sources de photons intriqués avec un temps inférieur au temps de cohérence des photons c et c', soit généralement un temps inférieur à la picoseconde, voire même inférieur à quelques dizaines de femtosecondes en fonction des sources utilisées, pour assurer le recouvrement temporel des photons émis par les sources indépendantes au niveau de la ou des stations relai. Les réalisations expérimentales d'un réseau grande distance du type de la figure 1C sont ainsi affectées par les limitations technologiques dues principalement à la nécessité de synchronisation des sources d'intrication situées à grandes distances.

Notamment, la synchronisation électronique ou optoélectronique des sources d'intrication entraîne un accroissement de la gigue temporelle (autrement appelée «timing jitter » selon l'expression anglo-saxonne) qui ne peut être compensée qu'en augmentant le temps de cohérence des photons intriqués au moyen d'un filtrage spectral des photons, ce qui induit une diminution de la fréquence de communication des qubits. Par exemple, il a été montré (voir R. Kaltenbaek et al., « High-fidelity entanglement swapping with fully independent sources », Phys. Rev. A, 79, 040302 (2009)) qu'avec une synchronisation optoélectronique des sources d'intrication, il n'est pas possible d'éloigner les sources d'intrication de plus de 30 kms, et la fréquence d'émission des paires de photons intriqués reste limitée avec cette technique à 100 MHz.

Une approche hybride de synchronisation optoélectronique a été proposée faisant état de la faisabilité d'une communication à 2 GHz (voir la thèse de doctorat d'O. Landry « Tools for quantum repeaters : quantum teleportation, independent sources of entrangled photons and entanglement purification», Univ. Genève, 2010, no Sc. 4163 et O.Landry et al., « Simple synchronisation of independent picosecond photon sources for quantum communication experiments », arXiv :1001,3389 (2010))). Plus précisément, il est décrit dans le chapitre 6 de la thèse de doctorat d'O. Landry des sources d'intrication indépendantes pour un réseau de communication quantique et la synchronisation de ces sources. La synchronisation est basée sur l'émission d'impulsions lumineuses par un laser maître (« Mode locked laser ») permettant d'une part de pomper une des sources d'intrication et d'autre part de déclencher un laser esclave, lui-même utilisé pour pomper une deuxième source d'intrication. Cependant, le déclenchement externe du laser esclave par le laser maître entraîne là encore des effets de gigue temporelle, liées à des conversions opto-électriques et électro-optiques, ce qui limite la précision de la synchronisation et par conséquent, la distance maximale à laquelle il est possible d'éloigner les sources d'intrication.

La demande US 2009/0317089 décrit une architecture de réseau de communication quantique comprenant des stations relais reliées en cascade pour augmenter la distance de communication. L'architecture est basée sur l'utilisation d'une source laser de pompe unique pour la création dans une première station d'une première paire de photons intriqués, puis, à une distance donnée, la création dans une deuxième station d'une seconde paire de photons intriqués au moyen d'une partie du faisceau pompe prélevée et transmise à la deuxième station, la création de la seconde paire de photons intriqués étant conditionnée à la détection d'un des photons de la première paire. Ce fonctionnement séquentiel suppose cependant le couplage dans chacun des tronçons de la partie du faisceau pompe prélevée à la station précédente avec un des photons intriqués de la paire de photons intriqués créés à la station précédente, rendant la mise en oeuvre techniquement délicate. Par ailleurs, la propagation entre deux stations du faisceau de pompe de longueur d'onde nécessairement plus courte que celle des photons intriqués limite la distance entre les stations du fait des pertes en transmission. On note également que la technologie décrite implique la détection d'un photon intriqué dans la station même où il a été généré, ce qui limite la portée de la communication.

Un objet de l'invention est de proposer une méthode et un dispositif de synchronisation tout optique de sources d'intrication permettant une communication quantique sur un réseau à base de relais quantiques à fort débit et sur de très grandes distances, sans les limitations de l'art antérieur.

### RESUME DE L'INVENTION

Selon un premier aspect, l'invention concerne un dispositif de synchronisation de sources d'intrication à pompage optique dans un réseau de communication quantique, comprenant une source lumineuse impulsionnelle permettant l'émission d'impulsions lumineuses à longueur d'onde télécom distribuées en parallèle à l'ensemble des sources d'intrication pour assurer une horloge optique commune auxdites sources d'intrication et comprenant, pour chaque source d'intrication, un dispositif de conversion de fréquence de l'impulsion lumineuse distribuée, permettant la génération d'une impulsion lumineuse à une longueur d'onde adaptée au pompage optique de la source d'intrication pour la génération de paires de photons intriqués.

Ce nouveau concept de synchronisation tout optique, qui met en oeuvre une source impulsionnelle unique permettant de délivrer une horloge optique commune aux différentes sources d'intrication d'un réseau, permet de s'affranchir de la gigue temporelle additionnelle inhérente aux dispositifs optoélectroniques, et rend possible l'établissement de réseaux de communication quantique sur longues distances et à haut débit. Cette nouvelle forme de synchronisation peut s'appliquer quel que soit le protocole mis en oeuvre dans le réseau de communication quantique, à un nombre quelconque de sources d'intrication et d'utilisateurs, dans une communication deux à deux entre les utilisateurs.

Selon une variante, ladite source lumineuse impulsionnelle est un laser émettant des impulsions à 1550 nm. Cette longueur d'onde, très utilisée dans les télécoms, permet l'utilisation des composants télécoms standards à bas coût (fibres optiques et composants).

Selon une variante, le dispositif de synchronisation comprend en outre, pour chaque source d'intrication, un dispositif de régénération d'horloge. Le dispositif de régénération d'horloge peut comprendre par exemple un module à compensation de dispersion, permettant de compenser la dispersion due à la propagation de l'impulsion d'horloge depuis la source impulsionnelle jusqu'à la source d'intrication et/ou un amplificateur optique pour récupérer la puissance optique moyenne.

Selon une variante, le dispositif de conversion de fréquence de l'impulsion lumineuse distribuée est un module de doublage de fréquence ou de sommation de fréquence. La longueur d'onde adaptée au pompage optique de la source d'intrication est généralement dans le visible mais grâce au nouveau concept de synchronisation, la conversion dans le visible si elle est nécessaire est réalisée localement au niveau de la source d'intrication, limitant les pertes de propagation de l'impulsion d'horloge dans les fibres optiques.

Avantageusement, le dispositif de convention est un doubleur de fréquence, par exemple un guide d'onde de niobate de lithium périodiquement polarisé, disponible commercialement.

Selon une variante, ladite source lumineuse impulsionnelle est un laser émettant des impulsions picoseconde dont la remise en forme est bien maitrisée. Ces sources offrent par ailleurs des hauts taux de répétition.

Selon une variante adaptée à des réseaux de communication quantique utilisant le temps d'émission comme observable quantique pour l'encodage des photons, le dispositif de synchronisation comprend en outre un dispositif de préparation de l'observable quantique utilisant un interféromètre de Mach-Zehnder. L'interféromètre de Mach-Zehnder permet la distribution de doublets d'impulsions aux sources d'intrication. Cela simplifie l'encodage des qubits au niveau des sources d'intrication puisqu'un seul module de préparation est nécessaire au niveau de la source laser impulsionnelle, et non plus au niveau de chaque source d'intrication.

Selon un second aspect, l'invention concerne un réseau de communication quantique entre au moins un premier et un second utilisateur comprenant, pour chaque couple d'utilisateur, une pluralité de sources d'intrication disposés en cascade entre lesdits utilisateurs et entre deux sources d'intrication, une station relai permettant la téléportation d'intrication entre les utilisateurs, et comprenant en outre un dispositif de synchronisation de l'ensemble desdites sources d'intrication selon le premier aspect.

Selon une variante, les sources d'intrication comprennent un dispositif d'optique non linéaire pour la génération de paires de photons intriqués. Par exemple, il peut s'agir de mélange à 4 ondes ou de conversion paramétrique spontanée. Dans l'un ou l'autre de ces exemples, des dispositifs pour la mise en oeuvre de ces effets sont disponibles commercialement.

Selon une variante, l'observable quantique du photon est le temps d'émission.

Selon un troisième aspect, l'invention concerne une méthode de synchronisation de sources d'intrication à pompage optique dans un réseau de communication quantique comprenant l'émission et la distribution en parallèle à l'ensemble des sources d'intrication d'impulsions lumineuses à longueur d'onde télécom et comprenant localement, au niveau de chacune des sources d'intrication, la conversion en fréquence de l'impulsion d'horloge dans une longueur d'onde adaptée au pompage optique de ladite source.

Avantageusement, la méthode selon le troisième aspect comprend en outre au niveau de chacune des sources d'intrication, la régénération de l'impulsion d'horloge.

### BREVE DESCRIPTION DES DESSINS

D'autres avantages et caractéristiques de l'invention apparaîtront à la lecture de la description, illustrée par les figures suivantes. Sur les figures, les éléments identiques sont repérés par les mêmes références.
- Figures 1A à 1C (déjà décrites), des schémas illustrant des réseaux de communication quantique entre deux utilisateurs, selon l'art antérieur;
- Figure 2, un schéma illustrant de façon générale un réseau de communication avec un dispositif de synchronisation des sources d'intrication selon un exemple de réalisation de l'invention ;
- Figure 3, un schéma montrant un exemple particulier du réseau de communication illustré sur la figure 2 ;
- Figure 4, un schéma illustrant une variante d'un réseau de communication quantique selon l'invention.

### DESCRIPTION DETAILLEE

La figure 2 décrit un exemple de réalisation d'un réseau de communication quantique 200 selon l'invention entre deux utilisateurs Alice et Bob situés aux lieux A et B. Le réseau de communication quantique est comme le réseau 100 représenté sur la figure 1C un réseau à base de relais quantiques. Il comprend une pluralité de sources d'intrication 141, 142 pompées optiquement et de stations relai 13 disposées entre les sources et permettant la téléportation d'intrication entre les utilisateurs. La génération des paires de photons intriqués dans les sources d'intrication est par exemple obtenue par pompage d'un composant optique non linéaire, par exemple au moyen d'un processus de mélange à 4 ondes par effet non linéaire du 3^{ème} ordre (⁽³⁾) dans une fibre non linéaire ou par conversion paramétrique spontanée par effet non linéaire du 2^{ème} ordre (χ⁽²⁾) dans un cristal non linéaire, autrement appelée SPDC selon l'abréviation de l'expression anglo-saxonne « spontaneous parametric down conversion ». Dans cet exemple, seules deux sources d'intrication sont représentées, mais l'invention s'applique aussi bien à un réseau de communication comprenant n sources d'intrication, n ≥ 2, n-1 stations relai étant alors prévues, avec une station relai entre deux sources. Entre les sources d'intrication et la station relai d'une part et les sources d'intrication et les utilisateurs d'autre part, des tronçons de fibre optique 153, 154, 155, 156, permettent la propagation des photons intriqués, de préférence à une longueur d'onde télécom pour assurer la propagation des photons sur chaque tronçon avec des pertes les plus faibles possibles. Pour chaque utilisateur, un récepteur 11A, 11B permet l'analyse de l'état quantique d'un photon de la paire de photons intriqués générée par la source la plus proche. Comme décrit précédemment, les récepteurs comprennent par exemple un dispositif d'analyse des qubits et deux détecteurs pour l'analyse de l'état quantique des photons selon deux bases de mesure. Les détecteurs utilisés sont par exemple des détecteurs supraconducteurs pour la détection de photon unique ou SSPD, selon l'abréviation de l'expression anglo-saxonne « superconducting single-photon detectors ».

Dans l'exemple de la figure 2, le réseau de communication quantique comprend également un dispositif 20 de synchronisation des sources d'intrication 141, 142. Le dispositif 20 de synchronisation comprend une source lumineuse impulsionnelle 21, avantageusement une source laser, par exemple une source laser picoseconde, permettant l'émission d'impulsions distribuées à l'ensemble des sources d'intrication pour assurer une horloge optique commune auxdites sources. Dans la suite de la demande, ces impulsions sont appelées « impulsions d'horloge ». La longueur d'onde de la source, la durée des impulsions et la cadence de répétition sont choisies en fonction de la longueur du réseau. Avantageusement, afin de couvrir une distance maximale en minimisant les pertes par propagation, la longueur d'onde pourra être choisie dans les bandes télécoms normalisées par l'UIT (par exemple, bandes O, E, S, C, L, U). On parle alors de longueurs d'onde «télécom». Des tronçons de fibre optique 22, 23, adaptées à la propagation à la longueur d'onde d'émission de la source laser 21 permettent la propagation des impulsions d'horloge respectivement vers les sources d'intrications 141, 142. Alternativement, une propagation en espace libre des impulsions d'horloge est également possible dans le cas où ladite source lumineuse impulsionnelle émet dans une bande spectrale comprise dans l'une des bandes de transparence de l'atmosphère (bande spectrale visible, et bandes spectrales centrées autour de 4 µm, 4,6 µm et 8,5 à 10 µm). En pratique, seule une source laser émettant dans le visible est envisageable du fait de la disponibilité des sources et des détecteurs de photons uniques dans les bandes spectrales de transparence de l'atmosphère. La propagation en espace libre dans le visible pose des difficultés de mise en oeuvre liées notamment aux obstacles naturels et aux conditions météorologiques, mais aussi à la lumière parasite qui limiterait la mise en oeuvre aux conditions nocturnes. Bien que la propagation des impulsions d'horloge en espace libre soit théoriquement possible pour la mise en oeuvre de l'invention, une telle réalisation serait ainsi peu fonctionnelle, si bien que la propagation par fibres optiques d'impulsions d'horloge à longueur d'onde télécom est préférée.

Avantageusement, le dispositif de synchronisation comprend en outre, au niveau de chaque source d'intrication, un module 24 de mise en forme de l'impulsion d'horloge permettant de régénérer et/ou adapter la longueur d'onde nécessaire au pompage de la source d'intrication. En cours de propagation en effet, pour des distances importantes, les pertes et la dispersion chromatique peuvent entraîner respectivement une diminution de la puissance optique moyenne et un élargissement de la durée de l'impulsion agissant comme horloge optique pour la source d'intrication. Comme cela sera décrit plus en détails par la suite, le module 24 peut alors comprendre par exemple un dispositif de régénération d'horloge, permettant de compenser les effets de dispersion chromatique résultant de la propagation de l'impulsion de la source laser à la source d'intrication. Il peut également comprendre un amplificateur à faible bruit et gain fort, par exemple un amplificateur à fibre dopé Erbium, permettant de récupérer la puissance optique moyenne adaptée, ce type d'amplificateur n'introduisant que très peu ou pas de gigue temporelle. Le module 24 de mise en forme de l'impulsion d'horloge comprend également un dispositif de conversion de fréquence de l'impulsion lumineuse d'horloge, utilisant par exemple un composant d'optique non linéaire fonctionnant en régime de doublage de fréquence (ou SHG selon l'expression anglo-saxonne « second harmonic generation ») ou de sommation de fréquence (ou SFG selon l'expression anglo-saxonne « sum frequency generation »), et permettant la génération d'une impulsion lumineuse à une longueur d'onde adaptée au pompage de la source d'intrication pour la génération de paires de photons intriqués. La longueur d'onde adaptée est par exemple dans le visible, permettant de pomper un composant optique non linéaire de la source d'intrication pour la génération de photons intriqués à longueur d'onde télécom. L'ensemble des étapes décrites ci-dessus pour la mise en forme de l'impulsion d'horloge peuvent être réalisées avec des composants disponibles commercialement et utilisés dans l'industrie des télécoms. Notamment, la conversion de fréquence peut être réalisée au moyen de guides d'onde non linéaires (NL/W selon l'abréviation de l'expression anglo-saxonne « non linear waveguides ») disponibles commercialement et particulièrement bien adaptés à la fois pour le doublage de fréquence et en vue de l'utilisation avec des sources d'intrication basées sur des mécanismes de type SDPC, du fait de leur efficacité, compacité et possibilité de fibrage optique. La distribution puis la mise en forme locale des impulsions d'horloge ainsi décrites permet de synchroniser automatiquement l'ensemble des sources d'intrication. La gigue temporelle résultante sur l'émission des paires de photons intriqués n'est due qu'à la gigue temporelle intrinsèque de la source d'impulsion lumineuse, typiquement de l'ordre de quelques pourcents de la durée d'impulsion du laser.

Le dispositif de synchronisation ainsi décrit peut s'appliquer à un réseau de communication quantique utilisant n'importe quelle observable quantique pour l'encodage des photons, et notamment la polarisation, la fréquence, le temps d'émission.

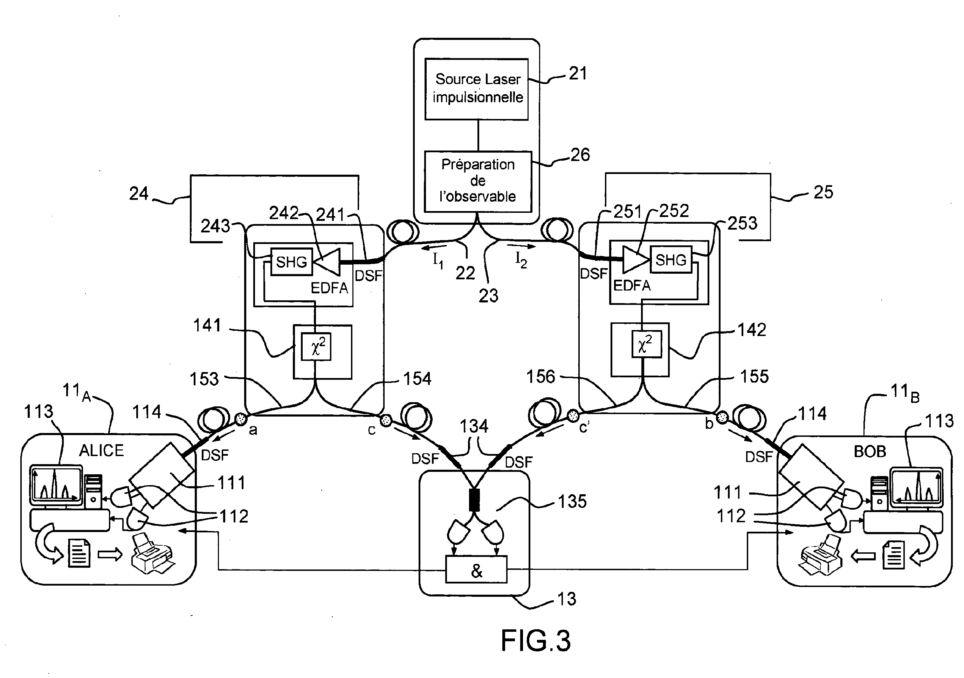

La figure 3 représente selon un exemple de réalisation plus détaillé des éléments du réseau de communication quantique de la figure 2.

La source lumineuse d'émission 21 des impulsions d'horloge est par exemple un laser picoseconde opérant à 5 GHz dans une bande de fréquence télécom, par exemple à 1550 nm. Les impulsions d'horloge (notées I₁, I₂ dans cet exemple) sont distribuées de part et d'autre vers les sources d'intrication 141, 142 sur une distance donnée de fibre optique standard (22, 23) pouvant aller jusqu'à quelques centaines de kilomètres, voire davantage en utilisant des répéteurs, si la technologie utilisée pour ces composants n'introduit pas de gigue temporelle additionnelle. Les paramètres de la source lumineuse d'émission sont choisis en fonction des effets prévisibles liés à la propagation dans une fibre sur une longue distance. Par exemple, la longueur d'onde centrale est adaptée pour assurer le minimum de pertes dans la fibre, par exemple dans cet exemple, le minimum de pertes dans la silice. Le choix de la durée d'impulsion (par exemple de l'ordre de 1 ps) et de la puissance optique moyenne (typiquement 0,1 mW) est basé sur un compromis consistant à éviter lors de la propagation des impulsions d'horloge les effets non linéaires (par exemple de type auto modulation de phase), tout en maintenant une durée d'impulsion suffisamment courte pour permettre des opérations de filtrage spectral simple sur les paires de photon, le filtrage permettant d'adapter le temps de cohérence des photons (photons en limite de Fourier). Par ailleurs, le taux de répétition devrait être le plus grand possible pour augmenter significativement le débit de la communication quantique. Cependant, deux photons arrivant consécutivement sur un compteur de photons doivent pouvoir être séparés ; le taux de répétition est donc limité par la technologie utilisée pour le compteur de photons. Typiquement, les détecteurs supraconducteurs pour la détection de photons uniques (SSPD) opèrent aujourd'hui typiquement avec une gigue temporelle de 40 ps (voir par exemple M. Halder et al. « Entangling independent photons by time measurement », Nature Phys. 3, 692 (2007)), limitant à 5 GHz la cadence de répétition de la source d'émission des impulsions d'horloge.

Le dispositif de synchronisation peut comprendre avantageusement un module 26 de préparation de l'observable quantique, adapté notamment pour des réseaux de communication quantique basés sur l'encodage des photons par le temps d'émission (« time-bin »). L'encodage par temps d'émission est reconnu aujourd'hui comme l'un des protocoles les plus robustes pour la communication quantique sur longue distance, du fait de la limitation des effets de décohérence pouvant apparaître lors de la propagation dans les fibres optiques (voir par exemple H. de Riedmatten et al. « Long-distance entanglement swapping with photons from separated sources », Phys. Rev. A, 71, 050302 (R) (2005)). Le modulé 26 de préparation de l'état quantique permet de pré-encoder l'impulsion d'horloge elle-même. Pour ce faire, le module 26 comprend un dispositif de démultiplexeur temporel disposé directement en sortie de la source laser impulsionnelle 21 et permettant de générer des paires d'impulsions cohérentes, c'est-à-dire présentant une relation de phase constante entre les impulsions d'une paire d'impulsions. Le dispositif de démultiplexeur temporel est par exemple un interféromètre de Mach-Zehnder dont les bras sont ajustés pour obtenir la séparation d'une impulsion incidente en deux impulsions décalées temporellement. Les doublets d'impulsion ainsi générés sont envoyés vers les sources d'intrication pour être localement convertis en fréquence et utilisés pour le pompage du composant optique non linéaire permettant la génération des photons intriqués par leur temps d'émission.

Comme illustré sur la figure 3, la dispersion chromatique dans les fibres 22, 23 peut être compensée respectivement par des modules 241, 251 à compensation de dispersion (par exemple des fibres à dispersion décalée de longueur adaptée ou DSF selon l'abréviation de l'expression anglo-saxonne « dispersion-shifted fiber »). Les modules 241, 251 font partie respectivement des modules 24, 25 de mise forme de l'impulsion d'horloge décrits sur la figure 2. Les modules 24, 25 comprennent en outre respectivement dans cet exemple un amplificateur optique (242, 252) et un dispositif de doublage de fréquence (243, 253). Avantageusement, un polariseur (non représenté sur la figure 3) est agencé avant le doubleur de fréquence pour garder l'axe de polarisation d'intérêt. Ce polariseur peut être prévu si les impulsions d'horloge sont dépolarisées pour prévenir des effets de rotation de polarisation induits pas de la variation temporelle de biréfringence lors de la propagation dans la fibre. Typiquement, les déposants ont montré que les pertes sur la puissance optique moyenne des impulsions d'horloge après une propagation d'environ 100 km sont de l'ordre de -30 dBm. Les impulsions d'horloge peuvent être régénérées au moyen d'un amplificateur optique (242, 252) de type amplificateur à fibre dopée Erbium, disponible commercialement, et dont le gain est typiquement de 60 dB. Les dispositifs de doublage de fréquence 243, 253 sont par exemple des guides d'onde de niobate de lithium périodiquement polarisé (ou PPLN/W selon l'expression anglo-saxonne « periodically poled lithium niobate waveguide »), dont l'efficacité est reconnue.

Les sources d'intrication 141, 142 comprennent par exemple un composant optique non linéaire permettant la conversion des impulsions de pompe (impulsions d'horloge doublées à 775 nm) en paires de photons signal et complémentaire (« idler ») non dégénérées, respectivement à 1549 nm et 1551 nm. Les deux photons interne (c et c') des deux paires de photons intriqués ainsi obtenus sont envoyées sur le dispositif 13 d'analyse de l'état de Bell (ou BSM), dans lequel une mesure d'interférence des photons est réalisée au moyen d'un dispositif 135 d'interférence à deux photons (voir par exemple P. Aboussouan et al., « High-visibility two-photon interference at a telecom wavelength using picosecond-regime separated sources», Physical Review A 81, 021801 (R) (2010)). Avantageusement, des modules de compensation de dispersion 134, 135 peuvent être prévus en entrée du BSM. Les photons externes (a et b) des paires de photons intriqués sont envoyés respectivement sur les récepteurs A et B des utilisateurs Alice et Bob. Chaque récepteur comprend par exemple, comme décrit précédemment, un dispositif d'analyse 111 des qubits et deux récepteurs 112, associés à un calculateur 113.

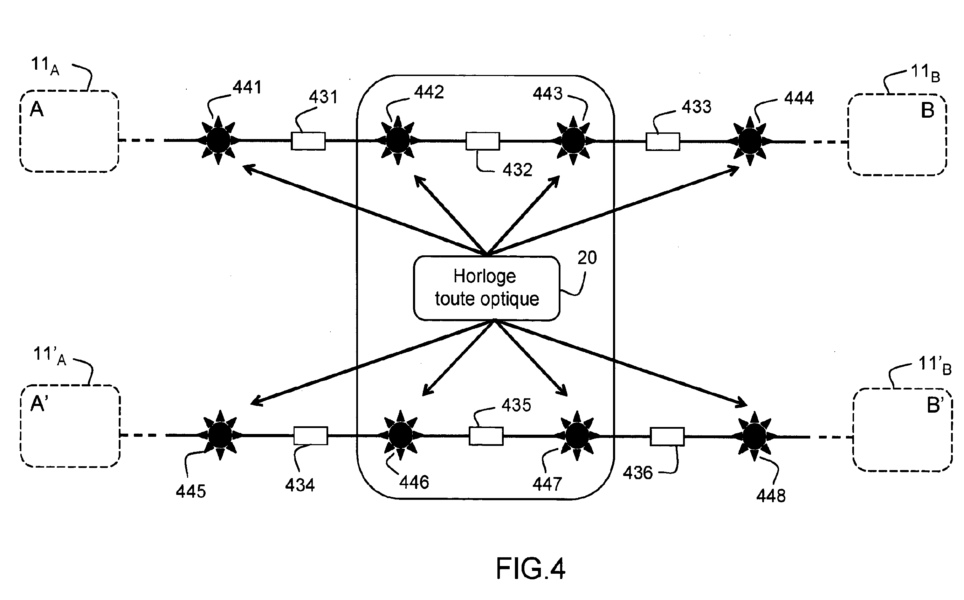

Les déposants ont ainsi démontré la faisabilité d'un réseau de communication quantique à grande distance, basé sur des opérations de relai entre des sources de photons intriqués indépendantes et les utilisateurs, grâce à une méthode et à un dispositif original de synchronisation des sources d'intrication. L'approche tout optique de la méthode de synchronisation ainsi divulguée permet la synchronisation de sources d'intrication éloignées à une cadence élevée et sans gigue temporelle additionnelle. Les déposants ont montré la faisabilité, avec des composants télécom et d'optique non linéaires disponibles commercialement, d'une communication quantique entre deux utilisateurs distants de plus de 400 km. Le concept peut être étendu à un nombre illimité de sources d'intrication et d'utilisateurs, dans une communication deux à deux. La figure 4 montre ainsi un exemple de réseau de communication quantique entre d'une part A et B et d'autre part A' et B'. Entre A et B et A' et B' respectivement, se trouvent suffisamment de sources d'intrication (141 à 144 et 145 à 148) relayés par des stations relai de type BSM (131 à 133 et 134 à 136) pour assurer la communication quantique deux à deux sur la distance recherchée. Un dispositif de synchronisation 20 tel que décrit précédemment permet d'assurer la synchronisation de l'ensemble des sources d'intrication 141 à 148 sans introduction de gigue temporelle additionnelle, permettant ainsi une communication à haut débit.

Bien que décrite à travers un certain nombre d'exemples de réalisation détaillés, le procédé et le dispositif de synchronisation selon l'invention comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

## Revendications

1. Dispositif (20) de synchronisation de sources d'intrication (141, 142) à pompage optique dans un réseau de communication quantique, comprenant une source lumineuse impulsionnelle (21) permettant l'émission d'impulsions lumineuses (I₁, I₂) à longueur d'onde télécom distribuées en parallèle à l'ensemble des sources d'intrication pour assurer une horloge optique commune auxdites sources d'intrication et comprenant, pour chaque source d'intrication, un dispositif (243, 253) de conversion de fréquence de l'impulsion lumineuse distribuée, permettant la génération d'une impulsion lumineuse à une longueur d'onde adaptée au pompage optique de la source d'intrication pour la génération de paires de photons intriqués.

2. Dispositif de synchronisation selon la revendication 1, dans lequel ladite source lumineuse impulsionnelle (21) est un laser émettant des impulsions à 1550 nm.

3. Dispositif de synchronisation selon l'une des revendications 1 ou 2, comprenant en outre des sections de fibre optique (22, 23) adaptées à la propagation desdites impulsions à ladite longueur d'onde télécom.

4. Dispositif de synchronisation selon l'une quelconque des revendications précédentes, comprenant en outre, pour chaque source d'intrication, un dispositif (241, 251) de régénération d'horloge.

5. Dispositif de synchronisation selon l'une quelconque des revendications précédentes, dans lequel le dispositif de conversion est un doubleur de fréquence.

6. Dispositif de synchronisation selon l'une des revendications précédentes, dans lequel ladite source lumineuse impulsionnelle est un laser émettant des impulsions picoseconde.

7. Dispositif de synchronisation selon l'une des revendications précédentes adapté à un réseau de communication quantique basé sur l'utilisation de l'observable quantique « temps démission » pour l'encodage des photons, comprenant en outre un dispositif (26) de préparation de l'observable quantique comprenant un interféromètre de Mach-Zehnder permettant la distribution de doublets d'impulsions.

8. Réseau de communication quantique entre au moins un premier et un second utilisateur (A, B) comprenant, pour chaque couple d'utilisateur, une pluralité de sources d'intrication (141, 142) disposés en cascade entre lesdits utilisateurs et entre deux sources d'intrication, une station relai (13), et comprenant en outre un dispositif (20) de synchronisation de l'ensemble desdites sources d'intrication selon l'une quelconque des revendications précédentes.

9. Réseau de communication quantique selon la revendication 8, dans lequel les sources d'intrication comprennent un dispositif d'optique non linéaire pour la génération de paires de photons intriqués.

10. Réseau de communication quantique selon l'une quelconque des revendications 8 ou 9, dans lequel l'observable quantique pour l'encodage des photons émis par lesdites sources d'intrication est le temps d'émission.

11. Méthode de synchronisation de sources d'intrication à pompage optique dans un réseau de communication quantique comprenant l'émission et la distribution en parallèle à l'ensemble des sources d'intrication d'impulsions lumineuses à longueur d'onde télécom et comprenant localement, au niveau de chacune des sources d'intrication, la conversion en fréquence de l'impulsion d'horloge dans une longueur d'onde adaptée au pompage optique de ladite source.

12. Méthode de synchronisation selon la revendication 11 comprenant en outre au niveau de chacune des sources d'intrication, la régénération de l'impulsion d'horloge.

## Patentansprüche

1. Vorrichtung (20) zur Synchronisierung von Verschränkungsquellen (141, 142) mit optischem Pumpen in einem Quantenkommunikationsnetz, umfassend eine Impulslichtquelle (21), die die Emission von Lichtimpulsen (I₁, I₂) mit einer Telekom-Wellenlänge ermöglicht, die parallel zu der Gesamtheit der Verschränkungsquellen verteilt werden, um einen optischen Takt sicherzustellen, der den besagten Verschränkungsquellen gemein ist, und umfassend für jede Verschränkungsquelle eine Vorrichtung (243, 253) zur Umwandlung der Frequenz des verteilten Lichtimpulses, die die Erzeugung eines Lichtimpulses mit einer Wellenlänge ermöglicht, die an das optische Pumpen der Verschränkungsquelle zur Erzeugung von Paaren von verschränkten Photonen angepasst ist.

2. Synchronisierungsvorrichtung nach Anspruch 1, wobei die besagte Impulslichtquelle (21) ein Laser ist, der Impulse mit 1550 nm emittiert.

3. Synchronisierungsvorrichtung nach einem der Ansprüche 1 oder 2, außerdem umfassend Glasfaserabschnitte (22, 23), die an die Ausbreitung der besagten Impulse mit der besagten Telekom-Wellenlänge angepasst sind.

4. Synchronisierungsvorrichtung nach einem der vorhergehenden Ansprüche, außerdem umfassend für jede Verschränkungsquelle eine Vorrichtung (241, 251) zur Taktwiederherstellung.

5. Synchronisierungsvorrichtung nach einem der vorhergehenden Ansprüche, wobei die Umwandlungsvorrichtung ein Frequenzverdoppler ist.

6. Synchronisierungsvorrichtung nach einem der vorhergehenden Ansprüche, wobei die besagte Impulslichtquelle ein Laser ist, der Pikosekundenimpulse emittiert.

7. Synchronisierungsvorrichtung nach einem der vorhergehenden Ansprüche, die auf ein Quantenkommunikationsnetz auf der Basis der Verwendung der Quanten-"Emissionszeit"-Observablen zur Verschlüsselung von Photonen angepasst ist und die außerdem eine Vorrichtung (26) zur Vorbereitung der Quanten-Observablen umfasst, die ein Mach-Zehnder-Interferometer umfasst, das die Verteilung von Impulsdubletten ermöglicht.

8. Quantenkommunikationsnetz zwischen mindestens einem ersten und einem zweiten Benutzer (A, B), umfassend für jedes Benutzerpaar mehrere Verschränkungsquellen (141, 142), die kaskadenartig zwischen den besagten Benutzern und zwischen zwei Verschränkungsquellen angeordnet sind, eine Relaisstation (13), und außerdem umfassend eine Vorrichtung (20) zur Synchronisierung der Gesamtheit der besagten Verschränkungsquellen nach einem der vorhergehenden Ansprüche.

9. Quantenkommunikationsnetz nach Anspruch 8, wobei die Verschränkungsquellen eine nichtlineare optische Vorrichtung zur Erzeugung von Paaren von verschränkten Photonen umfassen.

10. Quantenkommunikationsnetz nach einem der Ansprüche 8 oder 9, wobei die Quanten-Observable zur Verschlüsselung von Photonen, die von den besagten Verschränkungsquellen emittiert werden, die Emissionszeit ist.

11. Verfahren zur Synchronisierung von Verschränkungsquellen mit optischem Pumpen in einem Quantenkommunikationsnetz, umfassend die parallele Emission und Verteilung von Lichtimpulsen mit einer Telekom-Wellenlänge an die Gesamtheit der Verschränkungsquellen und umfassend lokal auf der Ebene jeder der Verschränkungsquellen die Umwandlung der Frequenz des Taktimpulses in eine Wellenlänge, die an das optische Pumpen der besagten Quelle angepasst ist.

12. Synchronisierungsverfahren nach Anspruch 11, außerdem umfassend auf der Ebene jeder der Verschränkungsquellen die Wiederherstellung des Taktimpulses.

## Claims

1. A device (20) for synchronizing entanglement sources (141, 142) with optical pump in a quantum communication network, comprising a pulsed optical source (21) allowing the emission of telecom wavelength optical pulses (I₁, I₂) distributed in parallel to the set of entanglement sources so as to ensure an optical clock common to said entanglement sources and comprising, for each entanglement source, a frequency conversion device (243, 253) for the distributed optical pulse, allowing the generation of a optical pulse at a wavelength adapted to optically pump the entanglement source for the generation of pairs of entangled photons.

2. The synchronization device as claimed in claim 1, in which said pulsed optical source (21) is a laser emitting pulses at 1550 nm.

3. The synchronization device as claimed in either of claims 1 and 2, furthermore comprising sections of optical fiber (22, 23) adapted to the propagation of said pulses at said telecom wavelength.

4. The synchronization device as claimed in any one of the preceding claims, furthermore comprising, for each entanglement source, a clock regeneration device (241, 251).

5. The synchronization device as claimed in any one of the preceding claims, in which the conversion device is a frequency doubler.

6. The synchronization device as claimed in one of the preceding claims, in which said pulsed optical source is a laser emitting picosecond pulses.

7. The synchronization device as claimed in one of the preceding claims, adapted to a quantum communication network based on the use of the "emission time" quantum observable for encoding the photons, furthermore comprising a device (26) for preparing the quantum observable comprising a Mach-Zehnder interferometer allowing the distribution of pulse doublets.

8. A quantum communication network between at least one first and one second user (A, B) comprising, for each user pair, a plurality of entanglement sources (141, 142) disposed in cascade between said users and between two entanglement sources, a relay station (13), and furthermore comprising a device (20) for synchronizing the set of said entanglement sources as claimed in any one of the preceding claims.

9. The quantum communication network as claimed in claim 8, in which the entanglement sources comprise a nonlinear optics device for the generation of pairs of entangled photons.

10. The quantum communication network as claimed in either one of claims 8 and 9, in which the quantum observable for encoding the photons emitted by said entanglement sources is the emission time.

11. A method for synchronizing entanglement sources with optical pump in a quantum communication network comprising the emission and the distribution in parallel to the set of entanglement sources of telecom wavelength optical pulses and comprising locally, at the level of each of the entanglement sources, the frequency conversion of the clock pulse in a wavelength adapted to optically pump said source.

12. The synchronization method as claimed in claim 11 furthermore comprising at the level of each of the entanglement sources, the regeneration of the clock pulse.
